# EUROPÄISCHE PATENTSCHRIFT

(11) **EP 0 704 507 B1**
(45) Veröffentlichungstag und Bekanntmachung des Hinweises auf die Patenterteilung: **14.11.2001**
(21) Anmeldenummer: 95115050.7
(22) Anmeldetag: 25.09.1995
(51) Int. Cl.: C09F 1/00

(54) **Verfahren zur kontinuierlichen Herstellung von Kolophoniumharzen**
Process for the continuous production of colophony resins
Procédé pour la production continue de résines de colophane

(30) Priorität: 01.10.1994 DE 4435284
(43) Veröffentlichungstag der Anmeldung: 03.04.1996
(73) Patentinhaber: HOECHST AKTIENGESELLSCHAFT, 65926 Frankfurt am Main (DE)
(72) Erfinder: Mayer, Gunter, Dr., D-61462 Königstein (DE)
(74) Vertreter: Zounek, Nikolai, Dipl.-Ing.

(56) Entgegenhaltungen:
- DE-A- 1 570 349
- DE-A- 1 948 922
- DE-A- 3 814 019

## Beschreibung

Die Erfindung betrifft ein kontinuierliches Herstellungsverfahren für Kolophoniumharze.

Harze für die Druckfarbenindustrie werden überwiegend auf Basis von Kolophonium hergestellt. Diese Kolophoniumharze entstehen durch Reaktionen der Harzsäuren des Kolophoniums, wie Polykondensation, Diels-Alder-Anlagerung, Addition, Veresterung und Salzbildung. Diese Umsetzungen laufen teilweise parallel und teilweise sequentiell ab und werden üblicherweise diskontinuierlich, gegebenenfalls in mehreren Stufen bei Temperaturen zwischen 150 und 300 °C durchgeführt. Der Vorteil dieser Arbeitsweise liegt darin, daß zu jeder Zeit eine homogene Verteilung der Reaktanden und Produkte und eine gleichmäßige Temperatur im Kessel gewährleistet sind. Die Reaktion ist durch Bestimmung einfacher Kenngrößen zu verfolgen. Nach Beendigung der Reaktion wird das fertige Harz aus dem Kessel ausgetragen und in eine handhabbare Form (z.B. Schuppen oder Pastillen) gebracht. Dazu wird häufig ein kontinuierlich betriebenes Kühlband eingesetzt. Während des Austrags aus dem heißen Reaktionskessel beobachtet man häufig eine Instabilität der Viskosität der Schmelze, offenbar durch eine Aufbaureaktion oder Abbaureaktion unter Veränderung der Molekülgröße (Änderung der Molmasse) des Harzes verursacht. Dies führt zu Eigenschaftsschwankungen im Harz und in den daraus hergestellten Produkten.

Es bestand daher die Aufgabe, ein Verfahren zu finden, das zu Kolophoniumharzen mit konstanten Produkteigenschaften führt. Erfindungsgemäß konnte diese Aufgabe gelöst werden, indem ein kontinuierliches Verfahren für diese Umsetzungen angewandt wird.

Kontinuierliche Verfahren zur Herstellung von chemischen Stoffen sind bekannt. Sie werden beispielsweise bei der Herstellung von Polymeren durch Polyaddition oder Polykondensation der betreffenden Monomere angewandt. Dabei müssen die Reaktionsprodukte jedoch unter den Reaktionsbedingungen stabil sein, das bedeutet hier, daß nach beendeter Reaktion keine Änderung der Molmasse mehr stattfinden darf. Nachdem bei den Kolophoniumharzen beim Austrag aus dem Reaktionskessel nach dem Kondensationsschritt eine derartige Änderung als Funktion der Zeit beobachtet wird, erscheint ein kontinuierliches Verfahren bei dieser Reaktion aufgrund des Verweilzeitspektrums solcher Anlagen unvorteilhaft. Daher werden in der Technik auch nur diskontinuierliche Verfahren verwendet.

Die Erfindung betrifft nun ein kontinuierliches Verfahren zur Herstellung von Kolophoniumharzen, bei dem die Reaktionsmischung in einer kontinuierlich betriebenen Reaktionskesselkaskade mit mindestens zwei Kesseln, bevorzugt mindestens drei Kesseln umgesetzt wird.

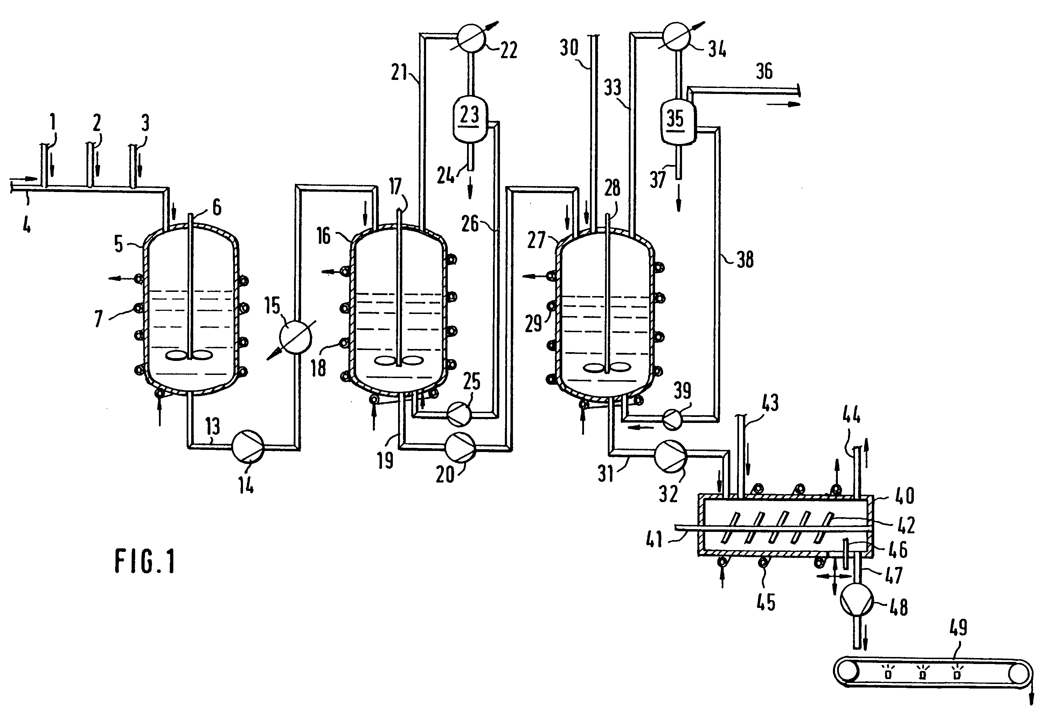

In einer Ausführungsform (siehe Abbildung 1, vollkontinuierliches Verfahren) werden die Ausgangsstoffe durch die Zuleitungen 1, 2, 3 und 4 in den ersten Behälter 5 kontinuierlich dosiert. Der Behälter ist mit einem Rührer 6 und mit einer Heizschlange 7 ausgerüstet. In diesem Behälter 5 werden die Ausgangsstoffe bereits teilweise umgesetzt, durch eine Leitung 13 über eine Dosiervorrichtung 14 und einen Wärmetauscher 15 gelangen sie in den Reaktor 16 und bevorzugt danach in mindestens einen weiteren Reaktor 27, wo sie unter ähnlichen Reaktionsbedingungen wie im ersten Reaktor weiter umgesetzt werden. Im Kessel 16 wird unter Rühren mit dem Rührer 17 und bei Beheizung durch die Heizschlange 18 umgesetzt. Dabei wird Wasser, gegebenenfalls gemeinsam mit einem Schleppmittel, durch das Brüdenrohr 21 in einen Kühler 22 geführt. In einem Abscheider bzw einer einfachen Kolonne 23 werden Wasser und Schleppmittel getrennt, das Schleppmittel wird durch das Rohr 24 über eine Dosiervorrichtung 25 vorzugsweise unter die Oberfläche des Reaktionsgutes in den Kessel 16 zurückgeführt. Das Reaktionsgut aus dem Kessel 16 wird durch das Rohr 19 und die Dosiervorrichtung 20 in einen Reaktor 27 geleitet und unter Rühren mit dem Rührer 28 und Beheizung mit der Heizschlange 29 weiter umgesetzt. Durch das Rohr 30 können weitere Zusatzstoffe dosiert werden. Die Umsetzung im Kessel 27 erfolgt vorzugsweise unter vermindertem Druck, über die Leitung 36 wird dabei Unterdruck angelegt. Über das Brüdenrohr 33 wird wie im vorigen Kessel eine Mischung aus Wasser und Schleppmittel abdestilliert, die Brüden werden im Wärmetauscher 34 kondensiert und im Wasserabscheider 35 (bzw. einer einfachen Kolonne) in wäßrige und organische Phase getrennt. Die organische Phase (Schleppmittel, gegebenenfalls flüchtige Reaktanden) wird über die Leitung 38 und eine Pumpe 39 unter den Spiegel zurückgeführt. Durch das Rohr 31 verläßt das Produkt den Reaktor, es kann entweder in einem gleichartigen Reaktor 27¹ oder mehreren gleichartigen Reaktoren 27¹, 27², ... , 27ⁿ weiter umgesetzt werden, oder es wird über die Pumpe 32 entweder direkt auf das Kühlband 49 ausgetragen, wo es verfestigt wird, oder es kann zur Vervollständigung der Reaktion in einem Rohrreaktor 40 weiter umgesetzt werden. Der vorzugsweise liegend angeordnete Rohrreaktor 40 ist mit einer Heizschlange 45 und einer angetriebenen Welle 41 versehen, die Paddel 42 trägt. Durch ein verstellbares Wehr 46 kann die Verweilzeit im Rohrreaktor angepaßt werden. Durch die Zuführleitung 43 kann man gegebenenfalls weitere Stoffe zuführen, durch die Leitung 44 werden flüchtige Reaktionsprodukte abgeführt, gegebenenfalls über eine nicht eingezeichnete Vakuumpumpe. Der Austrag aus dem Rohrreaktor erfolgt über die Produktleitung 47 durch eine Pumpe 48 auf das Kühlband 49.

Besonders bevorzugt wird dies Verfahren so durchgeführt, daß
- die Ausgangsprodukte in einen beheizten Rührreaktor 5 kontinuierlich dosiert und bei Temperaturen von 140 bis 180 °C, einem Druck von 1 bis 6 bar und einer mittleren Verweilzeit von 2 bis 10 Stunden gerührt und teilweise umgesetzt werden,
- die Mischung anschließend kontinuierlich über eine Dosiervorrichtung 14 und einen Wärmetauscher 15 in einen Rührreaktor 16 gepumpt wird,
- in diesem Reaktor 16 bei einer mittleren Verweilzeit von 2 bis 10 Stunden, einer Temperatur von 240 bis 300 °C und einem Druck von 0,1 bis 6 bar die Reaktion bei einem konstanten Füllstand kontinuierlich weitergeführt wird,
- das Reaktionsprodukt kontinuierlich in einen zweiten (27) oder mehrere weitere Reaktoren (27¹, 27², ..., 27ⁿ) gepumpt wird und dort unter den gleichen Bedingungen wie oben genannt weiter kondensiert wird, und
- das Reaktionsprodukt gegebenenfalls in einem speziellen Hochviskosreaktor 40 nachbehandelt wird, und dann
- über ein Kühlband 49 kontinuierlich ausgetragen wird.

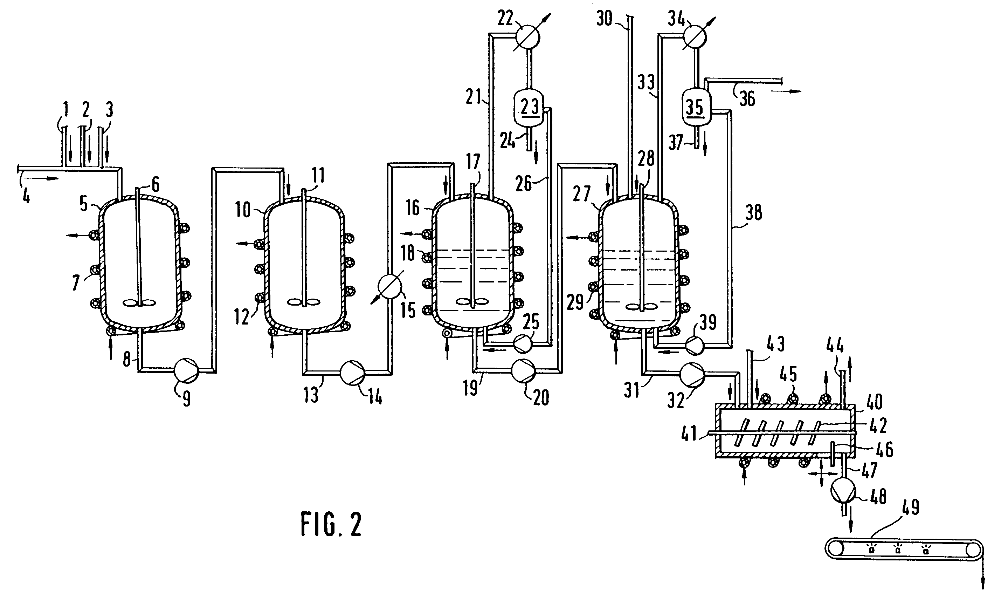

Gegenstand der Erfindung ist weiter auch ein halbkontinuierliches Verfahren (siehe Abbildung 2). Hier werden die Ausgangsstoffe durch die Zuleitungen 1, 2, 3 und 4 in den ersten Behälter 5 diskontinuierlich dosiert. Der Behälter ist mit einem Rührer 6 und mit einer Heizschlange 7 ausgerüstet. In diesem Behälter 5 werden die Ausgangsstoffe bereits teilweise umgesetzt, durch eine Leitung 8 über eine Dosiervorrichtung 9 gelangen sie in den Zwischenbehälter 10, der mit Rührer 11 und Beheizung 12 ausgerüstet ist. Von dort aus wird kontinuierlich durch die Leitung 13 und die Dosierpumpe 14 über den Wärmetauscher 15 in den ersten Reaktor 16 dosiert. Auch dieser Reaktor ist mit Rührwerk 17 und Beheizung 18 versehen. Im Kessel 16 wird weiter umgesetzt. Dabei wird Wasser, gegebenenfalls gemeinsam mit einem Schleppmittel, durch das Brüdenrohr 21 in einen Kühler 22 geführt. In einem Abscheider 23 werden Wasser und Schleppmittel getrennt, das Schleppmittel wird durch das Rohr 26 über eine Dosiervorrichtung 25 vorzugsweise unter die Oberfläche des Reaktionsgutes in den Kessel 16 zurückgeführt. Das Reaktionsgut aus dem Kessel 16 wird durch das Rohr 19 und die Dosiervorrichtung 20 in einen Reaktor 27 geleitet, und unter Rühren mit dem Rührer 28 und Beheizung mit der Heizschlange 29 weiter umgesetzt. Durch das Rohr 30 können weitere Zusatzstoffe dosiert werden. Die Umsetzung im Kessel 27 erfolgt vorzugsweise unter vermindertem Druck, über die Leitung 36 wird dabei Unterdruck angelegt. Über das Brüdenrohr 33 wird wie im vorigen Kessel eine Mischung aus Wasser und Schleppmittel abdestilliert, die Brüden werden im Wärmetauscher 34 kondensiert und im Wasserabscheider 35 in wäßrige und organische Phase getrennt. Die organische Phase (Schleppmittel, gegebenenfalls flüchtige Reaktanden) werden über die Leitung 38 und eine Pumpe 39 unter den Spiegel zurückgeführt. Durch das Rohr 31 verläßt das Produkt den Reaktor 27, es kann entweder in einem gleichartigen Reaktor 27¹ (oder mehreren gleichartigen Reaktoren 27¹, 27², ... , 27ⁿ) weiter umgesetzt werden, oder es wird über die Pumpe 32 entweder direkt auf das Kühlband 49 ausgetragen, wo es verfestigt wird, oder zur Vervollständigung der Reaktion in einem Rohrreaktor 40 weiter umgesetzt. Der vorzugsweise liegend angeordnete Rohrreaktor ist mit einer Heizschlange 45 und einer angetriebenen Welle 41 versehen, die Paddel 42 trägt. Durch ein verstellbares Wehr 46 kann die Verweilzeit im Rohrreaktor angepaßt werden. Durch die Zuführleitung 43 kann man gegebenenfalls weitere Stoffe zuführen, durch die Leitung 44 werden flüchtige Reaktionsprodukte abgeführt, gegebenenfalls über eine nicht eingezeichnete Vakuumpumpe. Der Austrag aus dem Rohrreaktor 40 erfolgt über die Produktleitung 47 durch eine Pumpe 48 auf das Kühlband 49.

Bevorzugt werden bei diesem Verfahren
- die Ausgangsprodukte in einem beheizten Behälter 5 gemischt und bei einer Temperatur von 140 bis 180 °C, einem Druck von 1 bis 6 bar und einer mittleren Verweilzeit von 1 bis 5 Stunden teilweise umgesetzt,
- die Mischung wird anschließend in einen zweiten beheizten und gerührten Zwischenbehälter 10 gepumpt, von dem sie kontinuierlich über eine Dosiervorrichtung 14 und einen Wärmetauscher 15 in einen Rührreaktor 16 gepumpt wird,
- in diesem Reaktor 16 wird bei einer mittleren Verweilzeit von 2 bis 10 Stunden, einer Temperatur von 240 bis 300 °C und einem Druck von 0,1 bis 6 bar die Reaktion bei einem konstanten Füllstand kontinuierlich weitergeführt,
- das Zwischenprodukt wird kontinuierlich in einen (27) oder mehrere weitere Reaktoren (27¹, 27², ... , 27ⁿ) gepumpt und dort unter den gleichen Bedingungen wie oben genannt weiter kondensiert, und
- gegebenenfalls in einem speziellen Hochviskosreaktor 40 nachbehandelt,
- das Produkt wird schließlich über ein Kühlband 49 kontinuierlich ausgetragen.

Gemäß der Erfindung werden die üblichen Ausgangsprodukte zur Herstellung von Kolophoniumharzen verwendet. Dies sind das Kolophonium selbst, Dienophile, die im Sinne einer Diels-Alder-Addition mit den Harzsäuren reagieren können, hydroxylfunktionelle Verbindungen wie ein- und mehrwertige Alkohole und Phenole, Verbindungen mit aktivierten Kohlenstoff-Kohlenstoff-Doppelbindungen wie Cyclopentadien oder dessen Oligomeren, an die die Harzsäuren über die Carboxylfunktionalität addiert werden können, etc. Bevorzugt für die Erfindung sind Kolophoniumharze, die durch ein- oder mehrstufige Reaktion aus Kolophonium, carboxyfunktionellen Dienophilen und zwei- oder mehrwertigen Alkoholen und/oder Phenolen hergestellt werden. Besonders bevorzugt sind Kolophoniumharze, die durch Reaktion mit Maleinsäureanhydrid, mehrwertigen aliphatischen Alkoholen und Resolen hergestellt werden.

Kolophonium wird aus dem Rohbalsam von Nadelhölzern, aus Extrakten von deren Wurzeln oder aus Tallöl gewonnen. Es handelt sich um ein Gemisch von Harzsäuren, wobei Abietinsäure und deren Isomer Lävopimarsäure den größten Teil ausmachen. Im Gemisch sind diese Säuren glasig erstarrt. Die Farbe des Kolophonium liegt je nach Herkunft zwischen hellgelb bis dunkelbraun. Alle technisch üblichen Qualitäten von Kolophonium sind für diese Erfindung verwendbar. Bevorzugt werden für die Anwendung im Druckfarbensektor hellfarbige Qualitäten eingesetzt. Abietinsäure und Lävopimarsäure weisen zwei durch eine Einfachbindung getrennte Kohlenstoff-Kohlenstoff-Doppelbindungen auf. Verbindungen mit einer Kohlenstoff-Kohlenstoff-Doppelbindung, die durch elektronegative Gruppen in der Nachbarschaft aktiviert ist, können sich im Sinne einer Diels-Alder-Addition an Abietinsäure und ihre Isomeren anlagern. Setzt man als Dienophil das Anhydrid einer olefinisch ungesättigten Carbonsäure wie z.B. Maleinsäureanhydrid ein, so wird die Carboxylfunktionalität erhöht und zusätzliche Reaktionen werden möglich. Die Veresterung eines derart mit Maleinsäureanhydrid modifizierten Kolophoniums mit einer Alkoholkomponente führt zu anderen Produkten als die gleichzeitige Umsetzung von Kolophonium mit Maleinsäureanhydrid und der Alkoholkomponente.

Insbesondere geeignet für die Anwendung als Druckfarbenharze sind Kolophoniumharze, die durch Umsetzung von Kolophonium mit Dienophilen im Sinne einer Diels-Alder-Anlagerung und mehrwertigen Alkoholen und/oder Resolen hergestellt werden.

Die für die Erfindung geeigneten Dienophile sind Substanzen mit einer Kohlenstoff-Kohlenstoff-Doppel- oder Dreifachbindung, die durch elektronegative Substituenten aktiviert ist. Geeignete elektronegative Substituenten sind z.B. Carbonsäure- und Carbonsäureanhydridgruppen, Aldehyd- und Ketongruppen und Cyanogruppen. Bevorzugte Dienophile sind daher, z. B. Maleinsäureanhydrid, (Meth)Acrylsäure, Itaconsäure, p-Benzochinon, (Meth)Acrolein und Tetracyanäthylen, besonders bevorzugt werden die säureaktivierten Dienophile wie Maleinsäureanhydrid.

Die Hydroxyverbindungen Alkohole und Phenole sind ausgewählt aus den zwei- und mehrwertigen aliphatischen, cycloaliphatischen und araliphatischen Alkoholen und aus den ein- oder mehrkernigen zwei- oder mehrwertigen Hydroxyaromaten, wobei mehrere aromatische Kerne durch direkte Bindungen oder über zweiwertige Gruppen wie Alkylen-, Äther-, Keton- oder Sulfon-Gruppen miteinander verbunden sein können. Bevorzugt sind mehrwertige aliphatische Alkohole wie Glycerin, Neopentylglykol, Pentaerythrit und Sorbit.

Die für die Erfindung geeigneten Resole werden durch alkalische Kondensation von Phenol oder substituierten Phenolen mit Formaldehyd gewonnen. Die Resole reagieren vorzugsweise unter Bildung von Methylenbrücken an einer sterisch möglichst wenig gehinderten Stelle der Dienstruktur der Harzsäuren.

Verbindungen mit elektronenreichen Kohlenstoff-Kohlenstoff-Doppelbindungen reagieren mit den Harzsäuren durch Addition der Carboxylgruppe an die Doppelbindung. Bevorzugte Verbindungen mit elektronenreichen Kohlenstoff-Kohlenstoff-Doppelbindungen sind z.B. Cyclopentadien oder dessen Oligomere, die beispielsweise unter dem Handelsnamen ® Escorez vertrieben werden.

Das erfindungsgemäße Verfahren wird also entweder vollkontinuierlich (gemäß Abbildung 1 und den Erläuterungen) oder halbkontinuierlich (gemäß Abbildung 2 und den Erläuterungen) durchgeführt. Beim vollkontinuierlichen Verfahren werden alle Ausgangsstoffe fest oder flüssig in den Behälter 5 dosiert und dort gegebenenfalls aufgeschmolzen. Zu den Ausgangsstoffen werden auch Veresterungskatalysatoren gegeben, geeignet sind beispielsweise Oxide von Alkali- und Erdalkalimetallen.

Beim halbkontinuierlichen Verfahren werden die Ausgangsstoffe nacheinander in den Behälter 5 vorgelegt und gegebenenfalls aufgeschmolzen. Dabei können bereits Reaktionen stattfinden. Die homogenisierte Mischung wird dann über die Leitung 8 in den Zwischenbehälter 10 gefördert. Aus dem Behälter 5 (kontinuierliches Verfahren) bzw. aus dem Zwischenbehälter 10 gelangt die Mischung mittels einer Zahnradpumpe 14 und einen Wärmetauscher 15 in den ersten Reaktionskessel 16, in dem sie unter Rühren bei einer Temperatur von 240 bis 300 °C, vorzugsweise 250 bis 270 °C, und besonders bevorzugt zwischen 255 und 265 °C und einem Druck von 0,1 bis 6 bar, bevorzugt 0,9 bis 1,3 bar, und besonders bevorzugt 0,95 bis 1,1 bar über eine Zeit von 2 bis 10 Stunden gehalten wird. Unter diesen Reaktionsbedingungen setzt die Veresterung ein, dabei destilliert Reaktionswasser ab. Zur Vervollständigung der Reaktion kann das Reaktionswasser durch Zusatz eines Schleppmittels abdestilliert werden, das Schleppmittel wird vorzugsweise unterhalb des Spiegels durch eine Pumpe 25 wieder in den Kessel 16 eindosiert. Wasser und Schleppmittel lassen sich in einer einfachen Kolonne 23 trennen, wobei das Schleppmittel zurückgeführt wird.

Aus dem ersten Reaktionskessel 16 wird die Masse mittels einer Zahnradpumpe 20 in einen zweiten Reaktionskessel 27 gefördert und bei einer Temperatur von 240 bis 300 °C, bevorzugt von 250 bis 270 °C und besonders bevorzugt 255 bis 265 °C und einem Druck von 0,1 bis 6 bar, bevorzugt 0,1 bis 1,3 bar, und besonders bevorzugt 0,1 bis 1,1 bar unter Rühren mit einem wandgängigen Hochviskosrührer und einer mittleren Verweilzeit von 2 bis 10 Stunden, bevorzugt 4 bis 6 Stunden weiter umgesetzt.

Gegebenenfalls können nach dem Reaktor 27 weiter analoge Reaktoren mit derselben Peripherie angeordnet werden. In diesem Fall wird das Reaktionsprodukt aus dem Reaktor 27 über die Zahnradpumpe 32 in einen Reaktor 27¹, und von dort über eine Zahnradpumpe 32¹ in einen Reaktor 27² gefördert, usw.

Als weitere Variante kann für hochviskose Schmelzen aus dem letzten Reaktionskessel 27 (bzw. 27¹, 27² etc.) kontinuierlich Produkt in einen Rohrreaktor 40 ausgetragen werden, der vorzugsweise liegend angeordnet ist. Dieser Reaktor ist mit einer Zwangsfördereinrichtung versehen, beispielsweise kann eine mit Paddeln 42 oder Flügeln besetzte zentrale Welle 41 verwendet werden. Durch Wehre 46 kann die Verweilzeit in dem Rohrreaktor angepaßt werden. Der Rohrreaktor wird in demselben Temperaturintervall wie der zweite Reaktionskessel 27 betrieben. Die Reaktion durch Veresterung läßt sich unterstützen durch Anlegen eines Unterdrucks in diesem Aggregat, üblich ist ein Druckbereich von 0,1 bis 1,0 bar, bevorzugt 0,1 bis 0,5 bar. Die Verweilzeit in diesem Reaktor wird nach den gewünschten Produkteigenschaften eingestellt, sie beträgt üblicherweise 0,5 bis 6 Stunden, bevorzugt 1 bis 3 Stunden.

Aus dem Reaktor 27 wird das fertige Kolophoniumharz durch eine Zahnradpumpe 32 auf ein kontinuierlich betriebenes Kühlband 49 ausgetragen. Für die Fälle der Varianten erfolgt der Austrag aus dem letzten Reaktor 27ⁿ durch die Zahnradpumpe 32ⁿ, bzw. aus dem Rohrreaktor durch die Zahnradpumpe 48. Das Harz wird dabei in Schuppenform oder bevorzugt in Form von Pastillen verfestigt.

In die Reaktoren 27 (bzw. 27¹ etc. sowie den Rohrreaktor 40) können über die Leitungen 30 (bzw. 30¹ etc. sowie 43) Zusatzstoffe zugefügt werden.

Gemäß einer weiteren Verfahrensvariante werden lediglich Kolophoniumharz und Dienophil in einen den ersten Behälter 5 vorgeschalteten Reaktor gegeben, dadurch läßt sich eine vorzeitige Reaktion eines carboxyfunktionellen Dienophils mit der hydroxylfunktionellen Komponente sicher vermeiden. Erst nach Vollendung der Diels-Alder-Anlagerung wird die hydroxyfunktionelle Komponente, gegebenenfalls in Kombination mit einem Veresterungskatalysator zugefügt. Das Produkt, das nach dem Verfahren gemäß der Erfindung hergestellt wird, ist ausgezeichnet durch gleichmäßige Produkteigenschaften und helle Farbe, besonders im Vergleich zu nach herkömmlichem Verfahren diskontinuierlich hergestelltem Produkt. Darüber hinaus verleihen bei gleicher chemischer Zusammensetzung die nach dem kontinuierlichem Verfahren hergestellten Produkte den Druckfarben, vorzugsweise solchen für den Illustrationstiefdruck mit Toluol, nach dem Andruck eine vorteilhafte höhere Glanzentwicklung als den Druckfarben, die mit nach diskontinuierlichem Verfahren hergestellten Bindemittelharzen formuliert sind. Dieser Unterschied war nicht vorhersehbar und ist deshalb als außerordentlich überraschend zu bezeichnen.

Weiterhin können durch die kontinuierliche Fahrweise zahlreiche Chargenprüfungen entfallen, die bei diskontinuierlichem Betrieb notwendig sind. Das Verfahren ist schon nach kurzer Zeit stabil.

Der Vorteil des erfindungsgemäßen Verfahrens wird durch die nachfolgenden Beispiele erläutert.

### Beispiele

Zu Versuchszwecken wurde eine Anlage aufgebaut, die für die kontinuierliche Herstellung modifizierter Kolophoniumharze geeignet ist. Sie besteht im wesentlichen aus einem 1 m³-Mischreaktor 5, der über eine beheizbare Leitung 13, eine Zahnradpumpe 14 und einen Wärmetauscher 15 mit einem weiteren 1 m³-Kessel 16 verbunden ist. Der Reaktor 16 ist über eine Rohrleitung 19 mit Zahnradpumpe 20 mit einem weiteren 1 m³-Kessel 27 verbunden, und dieser schließlich über eine Rohrleitung 31 mit Zahnradpumpe 32 mit einem Kühlband 49.

Alle Reaktoren sind mit Rührwerk, Destillationsvorrichtung und Wasserabscheider ausgerüstet. So kann das Reaktionsgemisch gut homogenisiert und flüchtige Bestandteile der Mischung, wie z.B. Wasser oder Harzöle, können aus dem Produktstrom abdestilliert werden.

Der Mischreaktor 5 kann über geeignete Dosiereinrichtungen (z.B. Pumpen oder Förderschnecken) kontinuierlich mit den Ausgangsrohstoffen beschickt werden.

Die Arbeitsweise sieht vor, daß die Edukte so in den Mischreaktor 5 dosiert werden, daß sich darin mit einer mittleren Verweilzeit V ein Reaktionsgemisch bestimmter Zusammensetzung (angegeben als Massengehalt bzw. Massenanteil in %, wobei die Summe aller eingesetzten Edukte 100 % beträgt) bei der gewünschten Temperatur T und dem Druck P befindet.

Der in den Reaktor 16 gelangende Produktstrom besitzt darin eine mittlere Verweilzeit V₁ bei einer Temperatur T₁ und einem Druck P₁ und im Reaktor 27 eine Verweilzeit V₂ bei einer Temperatur T₂ und einem Druck P₂.

Die mittleren Verweilzeiten (Stunden, h) werden über die Fördergeschwindigkeit der Zahnradpumpen und den Füllstand in den Reaktoren reguliert, die Temperatur (°C) durch die Heizung der Kessel, die mit Dampf bzw. durch Wärmeträgeröl erfolgen kann. Drücke über 1 bar werden durch Inertgasdruck (z.B. Stickstoff) oder den Dampfdruck des Produktstroms hervorgerufen, Drücke unter 1 bar durch Vakuumpumpen erzeugt.

Für die Versuche wurde jeweils eine Betriebsdauer von 120 h gewählt. Nach einer Betriebsdauer von ca. 15 bis 20 h hatte sich jeweils ein Produkt mit konstanten Eigenschaften eingestellt, was durch im Abstand von 5 h vom Kühlband entnommenen Harzproben und Bestimmung spezifischer Eigenschaften überprüft wurde. Dies geschah anhand ihrer Lösungsviskositäten in den üblichen für Druckfarbenharze relevanten Vehikeln, wie z.B. Toluol für Bindemittelharze für Illustrationstiefdruckfarben, oder Leinöl oder Mineralöl für Bindemittelharze für Offsetdruckfarben.

Wenn nicht anders angegeben, wurde bei Verwendung von Maleinsäureanhydrid dieses nicht direkt, sondern in Form seines bekannten Umsetzungsprodukts mit Kolophonium dosiert.

Die Viskositäten wurden mit einem üblichen Rotationsviskosimeter nach DIN 53229 bestimmt, und die Helligkeit der Harze mittels Jodfarbzahl nach DIN 6162.

Die Phenol-Formaldehyd-Kondensationsprodukte wurden nach den üblichen in der Phenolharzchemie bekannten Methoden hergestellt.

### Beispiel 1

### Herstellung eines Bindemittelharzes für Illustrationstiefdruckfarben mit Toluol

Mischreaktor 5: Reaktionsgemisch aus

| | |
|---|---|
| 72,6 % | Kolophonium |
| 3,5 % | Maleinsäureanhydrid |
| 9,8 % | Pentaerythrit |
| 1,2 % | Glycerin |
| 5,2 % | eines wäßrigen p-t-Butyl-Phenol-Formaldehyd-Kondensats (70proz. in Wasser, Viskosität 280 mPa·s/23 °C) |
| 5,8 % | eines wäßrigen Phenol-Formaldehyd-Kondensats (70proz. in Wasser, Viskosität 300 mPa·s/23 °C) |
| 1,9 % | Zinkoxid |

V = 5 h, T = 160 °C, P = 1,5 bar •
Reaktor 16: V₁ = 5 h, T₁ = 255 °C, P₁ = 1 bar
Reaktor 27: V₂ = 5 h, T₂ = 255 °C, P₂ = 200 mbar
Kühlband 49: Harzviskosität 50proz. in Toluol: 430 bis 520 mPa·s/23 °C

### Beispiel 2

### Verfahren analog Beispiel 1 aber mit verändertem Druck in Reaktor 2

Mischreaktor 5: Reaktionsgemisch aus

| | |
|---|---|
| 72,6 % | Kolophonium |
| 3,5 % | Maleinsäureanhydrid |
| 9,8 % | Pentaerythrit |
| 1,2 % | Glycerin |
| 5,2 % | eines wäßrigen p-t-Butyl-Phenol-Formaldehyd-Kondensats (70proz. in Wasser, Viskosität 280 mPa·s/23 °C) |
| 5,8 % | eines wäßrigen Phenol-Formaldehyd-Kondensats (70proz. in Wasser, Viskosität 300 mPa·s/23 °C) |
| 1,9 % | Zinkoxid |

V = 5 h, T = 160 °C, P = 1,5 bar
Reaktor 16: V₁ = 6 h, T₁ = 255 °C, P₁ = 1 bar
Reaktor 27: V₂ = 6 h, T₂ = 255 °C, P₂ = 100 mbar
Kühlband 49: Harzviskosität 50proz. in Toluol: 750 bis 910 mPa·s/23 °C

### Beispiel 3

### Herstellung eines Bindemittelharzes für Offsetdruckfarben

Mischreaktor 5: Reaktionsgemisch aus

| | |
|---|---|
| 67,8 % | Kolophonium |
| 3,2 % | Maleinsäureanhydrid |
| 9,2 % | Pentaerythrit |
| 19,0 % | eines wäßrigen Nonylphenol/Diphenylolpropan-Formaldehyd-Kondensats 70proz. in Wasser, Viskosität 270 mPa·s/23 °C) |
| 0,8 % | Magnesiumoxid |

V = 5 h, T = 160 °C, P = 1,5 bar
Reaktor 16: V₁ = 6 h, T₁ = 265 °C, P₁ = 1 bar
Reaktor 27: V₂ = 5 h, T₂ = 255 °C, P₂ = 100 mbar
Kühlband 49: Harzviskosität 35proz. in Leinöl: 450 bis 710 dPa·s/23 °C

### Beispiel 4

### Herstellung eines Bindemittelharzes für Offsetdruckfarben

Mischreaktor 5: Reaktionsgemisch aus

| | |
|---|---|
| 58,2 % | Kolophonium |
| 5,2 % | Glycerin |
| 26,5 % | Nonylphenol |
| 2,0 % | Diphenylolpropan |
| 0,6 % | Magnesiumoxid |
| 7,5 % | Paraformaldehyd |

V = 5 h, T = 160 °C, P = 4 bar
Reaktor 16: V₁ = 5 h, T₁ = 240 °C, P₁ = 1 bar
Wasser wird durch Azeotropdestillation mit Xylol entfernt
Reaktor 27: V₂ = 2 h, T₂ = 230 °C, P₂ = 100 mbar
Kühlband 49: Harzviskosität 35proz. in Mineralöl des Siedebereichs 240 bis 270 °C und des Anilinpunkts 72 °C: 350 bis 510 dPa·s/23 °C
Jodfarbzahl: 80 mg Jod/100 cm³

### Beispiel 5

### Herstellung eines Bindemittelharzes für Offsetdruckfarben

Mischreaktor 5: Reaktionsgemisch aus

| | |
|---|---|
| 45,4 % | Kolophonium |
| 4,7 % | Dicyclopentadienharz |
| 2,4 % | Maleinsäureanhydrid |
| 7,1 % | Kokosfett |
| 6,5 % | Pentaerythrit |
| 26,4 % | Nonylphenol |
| 0,6 % | Magnesiumoxid |
| 6,9 % | Paraformaldehyd |

V = 5 h, T = 160 °C, P = 4 bar
Reaktor 16: V₁ = 5 h, T₁ = 250 °C, P₁ = 1 bar
Wasser wird durch Azeotropdestillation mit Xylol entfernt
Reaktor 27: V₂ = 2 h, T₂ = 250 °C, P₂ = 100 mbar
Kühlband 49: Harzviskosität 30proz. in Mineralöl des Siedebereichs 240 bis 270 °C und des Anilinpunkts 72 °C: 100 bis 150 dPa·s/23 °

### Vergleichsbeispiel 1

Mit der Zusammensetzung des Beispiels 1 wird ein phenolharzmodifiziertes Kolophoniumharz diskontinuierlich in einer üblichen Apparatur mit Rührwerk und Destillationseinrichtung hergestellt:

Kolophonium und Maleinsäureanhydrid werden 30 Minuten bei 160 °C erhitzt. Dann werden Pentaerythrit, Glycerin, die beiden Phenol- und p-t-Butylphenol-Formaldehyd-Kondensationsprodukte sowie das Zinkoxid hinzugegeben. Dann wird auf 255 °C unter Destillation von Wasser erhitzt. Nachdem die Säurezahl unter 50 mg KOH/g Harz abgesunken ist, wird solange bei 100 mbar evakuiert, bis die Harzviskosität auf 430 bis 520 mPa·s/23 °C (50proz. in Toluol) angestiegen ist.

### Anwendungstechnischer Vergleich:

Nach üblichen Methoden werden jeweils aus dem Bindemittelharz des Beispiels 1 (Farbe A) und dem Bindemittelharz des Vergleichsbeispiels 1 (Farbe B) durch halbstündiges Dispergieren in der Kugelmühle aus

| | |
|---|---|
| 24 g | Bindemittelharz |
| 9 g | Pigment Litholrubin (Fa. BASF AG) |
| 67 g | Toluol |

Farben für den Illustrationstiefdruck hergestellt und im Tiefdruckverfahren Papier bedruckt. Der Glanz der Andrucke, der für ein gutes drucktechnisches Ergebnis möglichst hoch sein sollte, wird sodann mit dem Laborreflektometer nach Lange bei einem Einstrahlwinkel von 60 ° gemessen. Farbe A ergibt mit 57% reflektiertem Licht einen deutlich glänzenderen Andruck als Farbe B mit 52%.

### Vergleichsbeispiel 2

Mit der Zusammensetzung des Bindemittelharzes des Beispiels 4 wird ein phenolharzmodifiziertes Kolophoniumharz diskontinuierlich in einem üblichen 12 m³-Kessel mit Rührwerk und Destillationseinrichtung hergestellt:

Kolophonium, Glycerin, Nonylphenol und Diphenylolpropan, Magnesiumoxid und Paraformaldehyd werden 3 h auf 160 °C erhitzt, wobei sich ein Druck von 4 bar einstellt. Dann wird der Kessel drucklos gestellt und der Inhalt auf 240 °C erhitzt, wobei bei Erreichen einer Temperatur von 200 °C das entstehende Wasser mit Xylol als Schleppmittel azeotrop abdestilliert wird. Nachdem die Säurezahl unter 30 mg KOH/g Harz abgesunken ist, werden flüchtige Anteile 30 Minuten bei 100 mbar evakuiert. Dann wird der Kesselinhalt auf ein Kühlband entleert, wobei bei einer Kesselausbeute von 7,5 to ca. 5 h notwendig sind. Eine direkt am Anfang des Entleerens genommene Harzprobe zeigt eine Viskosität von 490 dPa·s (35proz. in Mineralöl des Siedebereichs 240 bis 270 °C und des Anilinpunkts 72 °C), während eine am Ende des Entleerens genommene Harzprobe eine Viskosität von lediglich 125 dPa·s aufweist. Für eine gleichmäßige Fertigung ist dieser Unterschied zu groß.

Das Harz weist zudem mit einer Jodfarbzahl von 110 mg Jod/100 cm³ eine unvorteilhaft höhere Färbung als das Harz des Beispiels 4 auf.

## Patentansprüche

1. Verfahren zur kontinuierlichen Herstellung von Kolophoniumharzen, bei dem die Reaktionsmischung in einer kontinuierlich betriebenen Reaktionskesselkaskade mit mindestens zwei Kesseln umgesetzt wird.

2. Verfahren nach Anspruch 1, **dadurch gekennzeichnet, daß** die kontinuierlich betriebenen Reaktionskesselkaskade aus mindestens drei Kesseln besteht.

3. Verfahren nach Anspruch 2, **dadurch gekennzeichnet, daß** die Reaktion in insgesamt drei kontinuierlich als Kaskade betriebenen Kesseln durchgeführt wird.

4. Verfahren nach Anspruch 2, **dadurch gekennzeichnet, daß** die Ausgangsprodukte in den ersten Kessel kontinuierlich dosiert und darin teilweise umgesetzt werden.

5. Verfahren nach Anspruch 2, **dadurch gekennzeichnet, daß** die Reaktionsmischung aus dem ersten kontinuierlich betriebenen Kessel über eine Dosiervorrichtung und einen Wärmetauscher in einen zweiten Reaktionskessel gefördert wird.

6. Verfahren nach Anspruch 2, **dadurch gekennzeichnet, daß** das Reaktionsprodukt aus dem zweiten Reaktionskessel in mindestens einem weiteren Reaktionskessel weiter umgesetzt wird.

7. Verfahren nach Anspruch 2, **dadurch gekennzeichnet, daß** die Reaktion im ersten Kessel bei einer Temperatur von 140 bis 180 °C, einem Druck von 1 bis 6 bar und einer mittleren Verweilzeit von 2 bis 10 Stunden durchgeführt wird.

8. Verfahren nach Anspruch 2, **dadurch gekennzeichnet, daß** die Reaktion im zweiten und den nachfolgenden Kesseln bei einer Temperatur von 240 bis 300 °C, einem Druck von 0,1 bis 6 bar und einer mittleren Verweilzeit von 2 bis 10 Stunden durchgeführt wird.

9. Verfahren nach Anspruch 2, **dadurch gekennzeichnet, daß** der letzte Kessel der kontinuierlich betriebenen Reaktionskesselkaskade durch einen Rohrreaktor ersetzt ist, der vorzugsweise liegend angeordnet ist und der mit einer Zwangsfördereinrichtung versehen ist, wobei die Verweilzeit in diesem Reaktor durch geometrische Veränderung des Förderorgans sowie das Anbringen von Wehren im Produktstrom variabel ist.

10. Verfahren nach Anspruch 1, **dadurch gekennzeichnet, daß** die Ausgangsprodukte vor der kontinuierlichen Umsetzung in einem beheizten Reaktor gemischt und diskontinuierlich bereits zu einem Teil umgesetzt werden.

11. Verfahren nach Anspruch 10, **dadurch gekennzeichnet, daß** die Reaktionsmasse aus dem diskontinuierlich betriebenen ersten Kessel in einen Zwischenbehälter gefördert wird, von dem aus sie kontinuierlich eine Reaktionskesselkaskade von mindestens zwei Kesseln durchläuft.

12. Verfahren nach Anspruch 10, **dadurch gekennzeichnet, daß** die Reaktion in dem ersten kontinuierlich betriebenen Kessel bei einer Temperatur von 240 bis 300 °C, einem Druck von 0,1 bis 6 bar und einer mittleren Verweilzeit von 2 bis 10 Stunden weitergeführt wird.

13. Verfahren nach Anspruch 10, **dadurch gekennzeichnet, daß** die Reaktionsmasse aus dem ersten kontinuierlich betriebenen Kessel in mindestens einen weiteren kontinuierlich betriebenen Reaktionskessel gefördert wird, in dem die Umsetzung innerhalb derselben Grenzen für die Reaktionsparameter Temperatur, Druck und Verweilzeit weitergeführt wird, und wobei der Druck gleich wie oder niedriger als im vorhergehenden Kessel, und/oder Temperatur und/oder Verweilzeit gleich wie oder höher als im vorhergehenden Kessel gewählt werden.

14. Verfahren nach Anspruch 11, **dadurch gekennzeichnet, daß** die Reaktion in zwei kontinuierlich betriebenen Reaktionskesseln durchgeführt wird.

15. Verfahren nach Anspruch 11, **dadurch gekennzeichnet, daß** die Reaktion in zwei kontinuierlich betriebenen Reaktionskesseln und einem nachfolgenden Rohrreaktor durchgeführt wird, der vorzugsweise liegend angeordnet ist und der mit einer Zwangsfördereinrichtung versehen ist, wobei die Verweilzeit in diesem Reaktor durch geometrische Veränderung des Förderorgans sowie das Anbringen von Wehren im Produktstrom variabel ist.

## Claims

1. A process for the continuous preparation of rosins, in which the reaction mixture is reacted in a continuously operated reaction vessel cascade comprising at least two reactors.

2. The process as claimed in claim 1, wherein the continuously operated reaction vessel cascade comprises at least three reactors.

3. The process as claimed in claim 2, wherein the reaction is carried out in a total of three reactors operated continuously as a cascade.

4. The process as claimed in claim 2, wherein the starting products are metered continuously into the first reactor and are partially reacted therein.

5. The process as claimed in claim 2, wherein the reaction mixture is conveyed from the first continuously operated reactor via a metering device and a heat exchanger into a second reaction vessel.

6. The process as claimed in claim 2, wherein the reaction product from the second reaction vessel is reacted further in at least one further reaction vessel.

7. The process as claimed in claim 2, wherein the reaction in the first reactor is carried out at a temperature of from 140 to 180°C, at a pressure of from 1 to 6 bar and with an average residence time of from 2 to 10 hours.

8. The process as claimed in claim 2, wherein the reaction in the second and subsequent reactors is carried out at a temperature of from 240 to 300°C, at a pressure of from 0.1 to 6 bar and with an average residence time of from 2 to 10 hours.

9. The process as claimed in claim 2, wherein the last reactor of the continuously operated reaction vessel cascade is replaced by a tube reactor which is preferably disposed horizontally and which is provided with a forced-conveyor device, the residence time in this reactor being variable by geometric alteration of the conveying element and by the disposal of weirs in the product stream.

10. The process as claimed in claim 1, wherein the starting products are mixed in a heated reactor prior to continuous reaction and are partially reacted batchwise.

11. The process as claianed in claim 10, wherein the reaction composition from the batchwise-pperated first reactor is conveyed into an intermediate tank from which it continuously traverses a reaction vessel cascade comprising at least two reactors.

12. The process as claimed in claim 10, wherein the reaction in the first continuously operated reactor is continued at a temperature of from 240 to 300°C, at a pressure of from 0.1 to 6 bar and with an average residence time of from 2 to 10 hours.

13. The process as claimed in claim 10, wherein the reaction composition from the first continuously operated reactor is conveyed into at least one further continuously operated reaction vessel in which the reaction is continued within the same limits for the reaction parameters of temperature, pressure and residence time, and in which case the pressure is equal to or lower than the pressure in the preceding reactor, and/or the temperature and/or residence time are equal to or higher than those in the preceding reactor.

14. The process as claimed in claim 11, wherein the reaction is carried out in two continuously operated reaction vessels.

15. The process as claimed in claim 11, wherein the reaction is carried out in two continuously operated reaction vessels and one subsequent tube reactor, which is preferably disposed horizontally and which is provided with a forced-conveyor device, the residence time in this reactor being variable by geometric alteration of the conveying element and by the disposal of weirs in the product stream.

## Revendications

1. Procédé pour la production continue de résines de colophane, dans lequel le mélange réactionnel est mis à réagir dans une cascade de réacteurs pilotés en continu avec au moins deux récipients.

2. Procédé selon la revendication 1, **caractérisé en ce que** la cascade de réacteurs pilotés en continu est constituée d'au moins deux récipients.

3. Procédé selon la revendication 2, **caractérisé en ce que** la réaction est effectuée dans trois récipients en tout pilotés en continu et raccordés en cascade.

4. Procédé selon la revendication 2, **caractérisé en ce que**, les produits de départ sont introduits de manière dosée en continu dans le premier récipient et mis à réagir partiellement dans celui-ci.

5. Procédé selon la revendication 2, **caractérisé en ce que**, le mélange réactionnel est chargé du premier récipient piloté en continu au moyen d'un dispositif d'introduction dosée et d'un échangeur de chaleur dans un deuxième réacteur.

6. Procédé selon la revendication 2, **caractérisé en ce que**, le produit de réaction sortant du deuxième réacteur est mis à réagir dans au moins un autre réacteur.

7. Procédé selon la revendication 2, **caractérisé en ce que** la réaction est réalisée dans le premier récipient à une température de 140 à 180°C, une pression de 1 à 6 bar et un temps de séjour moyen de 2 à 10 heures.

8. Procédé selon la revendication 2, **caractérisé en ce que** la réaction est réalisée dans les récipients suivants à une température de 240 à 300°C, une pression de 0,1 à 6 bar et un temps de séjour moyen de 2 à 10 heures.

9. Procédé selon la revendication 2, **caractérisé en ce que** le dernier récipient de la cascade de réacteurs pilotés en continu est remplacé par un réacteur tubulaire, qui est disposé de préférence horizontalement et qui est muni d'un dispositif d'introduction forcée, moyen par lequel le temps de séjour dans ce réacteur est variable par modification géométrique de l'organe d'alimentation et par l'insertion de barrages mobiles dans le flux des produits.

10. Procédé selon la revendication 1, **caractérisé en ce que** les produits de départ sont mélangés avant la réaction continue dans un réacteur chauffé et sont mis à réagir déjà en partie de manière discontinue.

11. Procédé selon la revendication 10, **caractérisé en ce que** la masse réactionnelle provenant du premier récipient piloté en discontinu est chargée dans un récipient intermédiaire, à partir duquel elle traverse une cascade de réacteurs d'au moins deux récipients.

12. Procédé selon la revendication 10, **caractérisé en ce que** la réaction est poursuivie dans le premier réacteur piloté en continu à une température de 240 à 300°C, sous une pression de 0,1 à 6 bar et pendant un temps de séjour de 2 à 10 heures.

13. Procédé selon la revendication 10, **caractérisé en ce que** la masse réactionnelle provenant du premier récipient piloté en continu est chargée dans au moins un autre réacteur piloté en continu, dans lequel la réaction est poursuivie à l'intérieur des même limites pour les paramètres réactionnels température, pression et temps de séjour, et dans lequel la pression est choisie égale ou inférieure à celle du récipient précédent, et/ou la température et/ou le temps de séjour sont choisis égaux ou supérieurs à ceux du récipient précédent.

14. Procédé selon la revendication 11, **caractérisé en ce que** la réaction est réalisée dans deux réacteurs pilotés en continu.

15. Procédé selon la revendication 11, **caractérisé en ce que** la réaction est réalisée dans deux réacteurs pilotés en continu et est poursuivie dans un réacteur tubulaire, qui est disposé de préférence horizontalement et qui est muni d'un dispositif d'introduction forcée, moyen par lequel le temps de séjour dans ce réacteur est variable par modification géométrique de l'organe d'alimentation et par l'insertion de barrages mobiles dans le flux des produits.
